# EUROPÄISCHE PATENTANMELDUNG

(11) **EP 2 241 508 A2**
(43) Veröffentlichungstag der Anmeldung: **20.10.2010**
(21) Anmeldenummer: 10156926.7
(22) Anmeldetag: 18.03.2010
(51) Int. Cl.: B65B 59/04, B29C 31/00, B29C 33/30, B65B 9/06

(54) **Arbeitsstation einer Blisterverpackungsmaschine**

(30) Priorität: 15.04.2009 CH 5992009
(71) Anmelder: MPS Maschinen & Pack-Systeme AG, 6330 Cham (CH)
(72) Erfinder: Stolz, Kurt, 8910 Affoltern am Albis (CH)
(74) Vertreter: Feldmann, Clarence Paul

(57) **Zusammenfassung**

Zur einfacheren Auswechslung der Werkzeugeinheiten (18) in Arbeitstationen (1, 10, 100, 101) einer Blisterverpackungsmaschine (2) wird vorgeschlagen, die Konstruktion der Arbeitsstationen so zu gestalten, dass die Trägersäulen (14) zwischen den oberen und den unteren Holmen (12, 15) der Rahmenkonstruktion der Arbeitsstationen weiter voneinander distanziert sind als die Längsausdehnung der Werkzeugeinheit, so dass diese zur Auswechslung quer zur Längsrichtung der Arbeitsstation ein- und ausgefahren werden kann.

## Beschreibung

Die vorliegende Erfindung betrifft eine Arbeitsstation einer Blisterverpackungsmaschine, insbesondere einer Tiefziehstation, einer Siegel- oder Schweissstation oder einer Stanz- oder Prägestation, umfassend eine Rahmenkonstruktion mit unteren Längs- und Querholmen und darin gelagertem Hebemechanismus, sowie oberen Längsholmen zwischen denen die entstehende Blisterverpackung transportiert wird, sowie zwischen oder oberhalb den unteren und oberen Holmen angeordnete Trägersäulen und Führungsmittel zur geführten Vertikalbewegung einer Aufnahme auf der eine auswechselbare Werkzeugeinheit angeordnet ist.

Blisterverpackungsmaschinen sind in grosser Zahl auf dem Markt vorhanden. Mittels solchen Maschinen werden Produkte zwischen einer tiefgezogenen Folie und einer Deckfolie verpackt. Eine solche Blisterverpackungsmaschine weist üblicherweise mindestens zwei Arbeitsstationen auf, nämlich einer Tiefziehstation in der eine Kunststofffolie durch tiefziehen unter Anlegung von Druckluft und/oder Vakuum zu schalen- oder becherförmigen Aufnahmen gebildet werden und einer zweiten Arbeitsstation, nämlich einer Siegel- oder Schweissstation in der die tiefgezogenen schalen- oder becherförmigen Aufnahmen mit einer zweiten Folie versiegelt beziehungsweise verschweisst werden. Diese zweite Deckfolie kann aus unterschiedlichen Materialien bestehen, insbesondere aus einer zweiten thermoplastischen Folie, einer Aluminiumfolie, Papier (ev. Laminiert) oder einer laminierten, mehr materialigen Folie. Je nach den zu verpackenden Güter weisen solche Blisterverpackungsmaschinen zudem noch Arbeitsstationen auf in denen die zu verpackenden Produkte eingefüllt werden und Stationen in denen die Blisterverpackungen gestanzt, geprägt oder perforiert werden. In all diesen Arbeitsstationen mit Ausnahme der Füllstation, sind üblicherweise Werkzeugeinheiten vorhanden, die auswechselbar sind. Einerseits um entsprechende Unterhaltsarbeiten durchführen zu können oder andererseits um andere Gestaltungsformen der entsprechenden Verpackungen fertigen zu können.

Während bei Blisterverpackungsmaschinen für Massenproduktionen die Werkzeuge bezüglich der Form praktisch nicht verändert werden und daher die Auswechslung lediglich für Revisionsarbeiten erforderlich ist, sind solche Maschinen die für unterschiedliche Produkte mit kleineren Serien geeignet sind die Auswechslung der Werkzeugeinheiten ein relativ häufig vorkommender Arbeitsvorgang.

Bei den heute üblichen auf dem Markt erhältlichen Blisterverpackungsmaschinen werden diese Werkzeugeinheiten aus den Arbeitsstationen von oben zugänglich gemacht und dann von oben ausgebaut. Dies ist relativ aufwendig und die Werkzeugeinheiten sind mit einem Gewicht von 50 bis 100 kg praktisch nur von zwei Arbeitern gemeinsam auswechselbar oder aber es muss hierfür ein entsprechendes Hebezeug vorhanden sein. Arbeitsstationen dieser Art sind beispielsweise aus der EP 1524087 bekannt. Auch die Anmelderin selbst bietet Blisterverpackungsmaschinen mit Arbeitsstationen an, bei denen die Werkzeugeinheit von oben her ein- und ausbaubar sind. Diese Art des Wechsels der Werkzeugeinheiten ist zeitaufwendig und eine höchst anstrengende Arbeit.

Es ist daher die Aufgabe der vorliegenden Erfindung eine Arbeitsstation für Blisterverpackungsmaschinen derart zu gestalten, dass der Arbeitsaufwand der mit der Auswechslung von Werkzeugeinheiten verbunden ist schneller und mit wesentlich weniger körperlichem Einsatz auch ohne Hebezeug durchführbar ist.

Diese Aufgabe löst eine Arbeitsstation einer Blisterverpackungsmaschine der eingangs genannten Art dadurch, dass die Trägersäulen und Führungsmittel mindestens auf einer Seite der Längsholmen der Arbeitsstation weiter voneinander distanziert sind als die Längsausdehnung der Werkzeugeinheit und wobei die Werkzeugeinheit auf der Aufnahme quer zur Längsrichtung von dieser verschiebbar ist und auf dieser mittels Positioniermittel lagegerecht haltbar ist, so dass eine seitliche, transversale Auswechselbarkeit der Werkzeugeinheit ermöglicht ist.

Weitere vorteilhafte Ausgestaltungsformen des Erfindungsgegenstandes gehen aus den abhängigen Patentansprüchen hervor und sind nachfolgend in der Beschreibung mit Bezug auf den anliegenden Zeichnungen beschrieben.

Insbesondere ist es vorteilhaft, wenn die Arbeitsstation einen frei beweglichen Transportwagen umfasst, mit einer Ladeplatte, welche in der Höhe einer definierten Tieflage der Aufnahme entspricht und Positionierungsmittel aufweisst zur lagepositionierten Anordnung einer Werkzeugeinheit, und dass ferner die Lagerplatte des Transportwagens und die Aufnahme der Arbeitsstation aufeinander abgestimmte Andockmittel aufweisen.

In der Zeichnung ist eine bevorzugte Ausführungsform des Erfindungsgegenstandes dargestellt und nachfolgend beschrieben.
- Figur 1: zeigt ein Ausführungsbeispiel einer Arbeitsstation in perspektivischer Darstellung von der Andockseite gesehen und
- Figur 2: dieselbe Arbeitsstation in perspektivischer Darstellung von der gegenüberliegenden Seite gesehen.
- Figur 3: zeigt einen zur Arbeitsstation gehörenden Transportwagen wiederum erst von der Andockseite dargestellt und
- Figur 4: diesen Transportwagen in perspektivischer Darstellung von der der Andockseite gegenüberliegenden Seite gesehen.
- Figur 5: stellt rein schematisch einen möglichen Aufbau einer Blisterverpackungsmaschine dar.

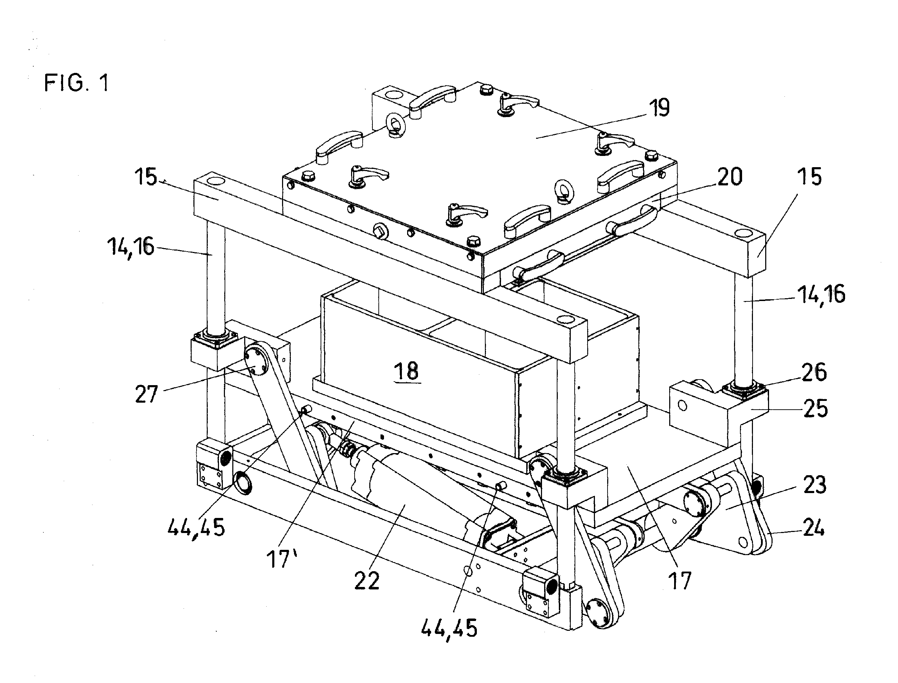

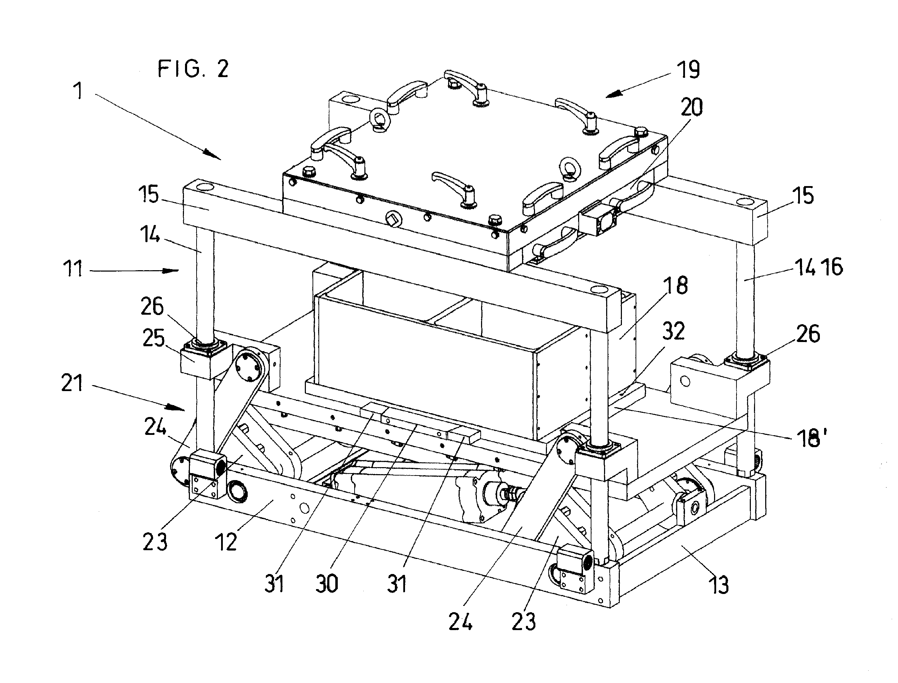

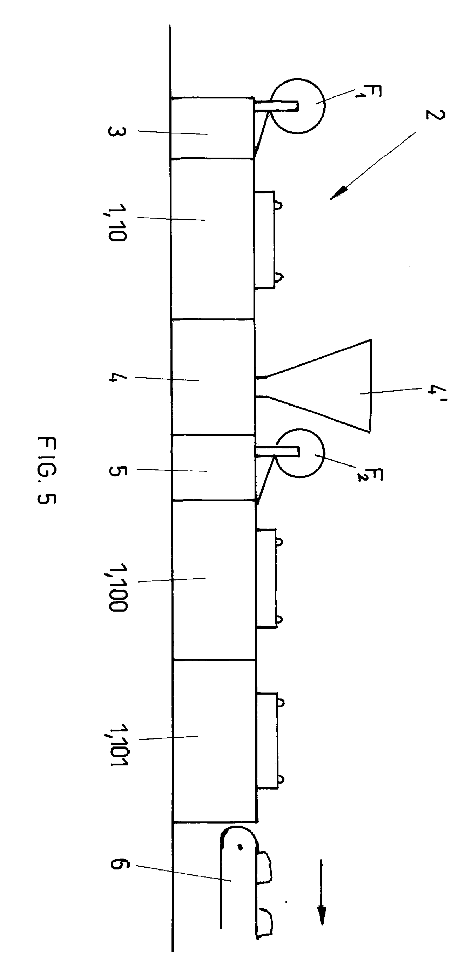

Blisterverpackungsmaschinen sind üblicherweise kundenspezifisch gefertigte Maschinen. Der generelle Aufbau kann daher in etlichen Varianten abweichen. Trotzdem sei hier ein möglicher genereller Aufbau einer Blisterverpackungsmaschine dargestellt. Zur optimalen Nutzung der Erfindung ist es dabei sinnvoll die verschiedenen hierbei vorkommenden Arbeitsstationen die generell mit 1 bezeichnet sind, gleich zu dimensionieren, so dass bei allen Stationen derselbe Transportwagen mit denselben Andockmitteln genutzt werden kann. Die gesamte hier in der Figur 5 dargestellte Blisterverpackungsmaschine sei insgesamt mit 2 bezeichnet. Eine erste Abrollstation 3 dient der Zuführung einer thermoplastischen Folie F₁. Diese wird in eine erste Arbeitsstation 1 eingeführt, welches in diesem Falle eine Tiefziehstation 10 ist, welche rein beispielsweise in den weiteren Figuren 1 und 2 als erfindungsgemässe Ausführungsform einer Arbeitsstation 1 detaillierter dargestellt ist. Dieser ersten Arbeitsstation 1 folgt eine Füllstation 4. Die Füllstation 4 stellt keine Arbeitsstation gemäss der Erfindung dar. Die Füllstation ist je nach der zu verpackenden Produkte äusserst unterschiedlich gestaltet. Handelt es sich bei den zu verpackenden Güter um relativ einfache Massenprodukte oder beispielsweise auch Lebensmittel verschiedenster Art, so lassen sich diese beispielsweise über einen Zufuhrtrichter 4' in die bereits tiefgezogenen schalen- oder becherförmigen Verpackungseinheiten einfüllen. Danach folgt eine zweite Abrollstation 5 bei der ein bahnförmiges Material F₂ praktisch beliebiger Art zugeführt wird um die gefüllten becher- oder schalenförmigen Verpackungseinheiten zu verschliessen. Insbesondere wird man hierzu wiederum eine Kunststofffolie, insbesondere eine thermoplastische Kunststofffolie, eine Aluminiumfolie, Papier (ev. Laminiert) oder eine laminierte Folie aus verschiedenen Materialien verwenden.

Nach der zweiten Abrollstation 5 folgt eine Arbeitsstation 1,100, welche eine Siegel- oder eine Schweissstation darstellt. Dieser zweiten Arbeitsstation folgt eine dritte Arbeitsstation 1,101. Diese dritte Arbeitsstation ist dann beispielsweise eine Stanz- oder Prägestation. Die fertigen Verpackungseinheiten, die oftmals noch zusammenhängen oder relativ grosse Überstände an Verpackungsmaterial aufweisen, werden ausgestanzt und gegebenenfalls mit Prägungen oder Perforationen versehen, je nach dem jeweiligen Bedarf. Dieser dritten Arbeitsstation folgt dann eine Abtransportstrecke 6 die allerdings nicht mehr Teil der Blisterverpackungsmaschine darstellt.

Die erfindungsgemässe Arbeitsstation 1 kann wie in diesem Beispiel gezeigt in einer einzigen Blisterverpackungsmaschine dreimal vorkommen. Sowohl bezüglich der Grösse und des Aufbaues sind alle drei Arbeitsstation gleich gestaltet, je nach der Funktion der entsprechenden Arbeitsstation sind darin jedoch unterschiedliche Werkzeugeinheiten angebracht. Während in der ersten Arbeitsstation 1, 10 ein Tiefziehwerkzeug vorhanden ist, wird in der zweiten Arbeitsstation 1, 100 eine Siegelschale die Werkzeugeinheit bilden während in der dritten Arbeitsstation 1, 101 die Werkzeugeinheit in einem Stanz-, Präge- oder Perforierwerkzeug besteht.

Nunmehr wird mit Bezug auf die Figuren 1 und 2 der generelle Aufbau einer Arbeitsstation 1 dargestellt. Die Arbeitsstationen sind selbstverständlich mit einer entsprechenden Abdeckung versehen, so dass der hier gezeigte Aufbau während des Betriebs nicht erkennbar ist. Um den Wechsel der Werkzeugeinheit vornehmen zu können, muss selbstverständlich die entsprechende Abdeckung erst entfernt werden. Hierzu muss die Anlage aus Sicherheitsgründen abgeschaltet werden. Die Gefahr von Verletzungen besteht einerseits durch die pneumatische (ev. Hydraulische) Auf- und Abbewegung der Aufnahme, beziehungsweise der Werkzeugeinheit, und andererseits in der möglichen Verbrennungsgefahr da diese Werkzeugeinheiten meist heiss sind.

Generell besteht die Arbeitsstation 1 aus einer Rahmenkonstruktion 11. Diese besitzt üblicherweise untere Längsholme 12 und untere Querholme 13. In den vier Ecken sind Trägersäulen 14 vorgesehen. Die oberen Enden der Trägersäulen 14 sind mit oberen Längsholmen 15 miteinander verbunden. Zusätzlich zu den Trägersäulen 14 können separate Führungsmittel 16 vorhanden sein. Im hier dargestellten, bevorzugten Ausführungsbeispiel bilden die Trägersäulen 14 gleichzeitig die Führungsmittel 16. Die Führungsmittel 16 führen eine Aufnahme 17 welche in der Rahmenkonstruktion 11 im Bereich zwischen den unteren Längsholmen 12 und den oberen Längsholmen 15 auf und abbewegbar ist. Diese Aufnahme 17 dient als Träger für eine darauf fixierbare, auswechselbare Werkzeugeinheit 18. Die Aufnahme 17 kann wie dargestellt eine Platte sein oder ein rahmenartiges Gebilde in der die Werkzeugeinheit 18 gehalten sein kann, beziehungsweise einschiebbar ist. Die Werkzeugeinheit 18 stellt im hier dargestellten Beispiel ein Tiefziehwerkzeug dar. Entsprechend lagert auf den oberen Holmen 15 eine Werkzeughaube 19, die mit der Werkzeugeinheit 18 zusammen wirkt. Die Werkzeughaube 19 besitzt normalerweise eine auswechselbare Heizplatte 20, die schubladenartig gestaltet sein kann und zudem hier nicht dargestellte Mittel zum Anlegen eines Unterdrucks beziehungsweise eines Überdrucks. Dasselbe trifft auch auf die Werkzeugeinheit 18 zu, die selbstverständlich ebenfalls elektrisch heizbar ist und Mittel aufweist um einen Unterdruck zu erzeugen. Da dies jedoch für die vorliegende Erfindung nicht von Bedeutung ist, wird auf diese speziellen konstruktiven Anteile nicht eingegangen.

Zwischen den Aufnahme 17 und dem unteren Bereich der Rahmenkonstruktion 11 bestehend aus den Längsholmen 12 und den Querholmen 13 ist ein Hebemechanismus der insgesamt mit 21 bezeichnet ist, dargestellt. Dieser Hebemechanismus 21 umfasst eine ein- oder beidseitig wirkende Kolbenzylindereinheit 22, die auf Dreieckumlenker 23 wirkt, welche mit Kniehebeln 24 zusammen wirken, welche die Aufnahme 17 gleichmässig auf- und abbewegen lassen. An den vier Ecken der Aufnahme 17 sind Führungswinkel 25 befestigt. In diesen Führungswinkeln 25 sind Lagerbuchsen 26 angeordnet, durch welche die Trägersäulen 14, die hier gleichzeitig die Führungsmittel 16 sind, hindurchgeführt. Bei den Lagerbuchsen 26 kann es sich sowohl um Gleitlager als auch um Rollenlagerbuchsen handeln. Des Weiteren sind an denselben Führungswinkeln 25 Drehlager 27 angebracht an denen das obere Ende der Kniehebel 24 drehbar angelenkt sind.

Der eigentliche Sinn dieser neuen Konstruktion der Arbeitsstation besteht in der Möglichkeit die Werkzeugeinheit 18 statt, wie bisher von oben relativ mühsam ein- und auszubauen, wesentlich schneller und einfacher dies von der Seite her möglich zu machen. Hierzu ist es zum einen erforderlich, dass die Trägersäulen 14, und falls diese gesondert gestaltet sind auch die Führungsmittel 16, mindestens auf jener Seite von der die Werkzeugeinheit eingeschoben beziehungsweise herausgezogen werden soll, soweit voneinander entfernt sind, dass die Distanz zwischen den Trägersäulen 14 beziehungsweise den Führungsmitteln 16 grösser ist als die Weite der Werkzeugeinheit 18.

Hinzu kommt, dass selbstverständlich die Werkzeugeinheit 18 auf der Aufnahme 17 möglichst einfach positionierbar und befestigbar sein soll. Hierzu weist die Werkzeugeinheit 18 einen Zentrierungsbalken 30 auf. Dieser Zentrierungsbalken 30 läuft an den Seitenflächen angeschrägt leicht konisch zusammen. Entsprechend sind auf der Aufnahme 17 zwei Zentrierungsbacken 31 angeordnet, zwischen denen der Zentrierungsbalken 30 formschlüssig und mindestens annähernd spielfrei einschiebbar ist. Befindet sich der Zentrierungsbalken 30 lagegenau zwischen den beiden Zentrierungsbacken 31 auf der Aufnahme 17, so ist die Werkzeugeinheit 18 auf der Aufnahme 17 korrekt positioniert. Die Werkzeugeinheit 18 kann beispielsweise seitlich vorstehende Abschnitte 18' aufweisen in denen Durchgangsbohrungen 32 vorhanden sind, die bei korrekter Positionierung mit entsprechenden Gewinde- oder Sacklochbohrungen in der Aufnahme 17 fluchtend ausgerichtet sind, so dass in der korrekten Lage die Werkzeugeinheit 18 mit ein oder mehreren Schrauben auf der Aufnahme 17 fixiert sein kann. Auf diese Weise kann eine seitlich in die Arbeitsstation 1 eingeschobene Werkzeugeinheit 18 einfach und schnell eingeschoben und herausgezogen werden, so wie lagekorrekt fixiert werden.

Besonders vorteilhaft ergänzt man die Arbeitsstation 1 mit einem Transportwagen 40. Dieser Transportwagen hat die Form eines Tisches, der mit einer Ladeplatte 41 versehen ist. Diese Ladeplatte 41 steht auf vier Tischbeinen 42, die mit allseitig schwenkbaren und arretierbaren Rollen 43 versehen sind. Die Ladeplatte 41 des Transportwagens 40 muss in der Höhe so angeordnet sein, dass diese Höhe mit einer vorgegebenen Tieflage der Aufnahme 17 übereinstimmt. Diese vorgegebene Tieflage entspricht entweder der tiefsten Lage eines Hub- und Absenkzykluses einer Auf- und Abbewegung der Werkzeugeinheit 18 oder kann auch eine spezielle Absenklage sein, die nur dem Wechseln der Werkzeugeinheit 18 dient. Für den Wechsel der Werkzeugeinheit 18 gibt man über eine hier nicht dargestellte Steuereinheit der Blisterverpackungsmaschine der entsprechenden Arbeitsstation 1 beziehungsweise 10, 100 oder 101 den Befehl auf die Auswechselhöhe zu fahren, wobei gleichzeitig eine Prozessabschaltung stattfindet, womit auch alle Sicherheitsaspekte gelöst sind. Nun kann man die Abdeckung an der entsprechenden Arbeitsstation oder an den entsprechenden Arbeitsstationen abmontieren oder öffnen und den Transportwagen 40 zur entsprechenden Arbeitsstation 1 fahren und dessen schwenkbaren Rollen 43 blockieren. Nachdem man die Werkzeugeinheit 18 entsichert hat kann man diese von der Aufnahme 17 auf die Ladeplatte 41 schieben, die sich auf derselben Höhe befindet. Auch wenn zwischen dem Transportwagen 40 und der Aufnahme 17 eine Lücke verbleibt ist dies an sich unproblematisch.

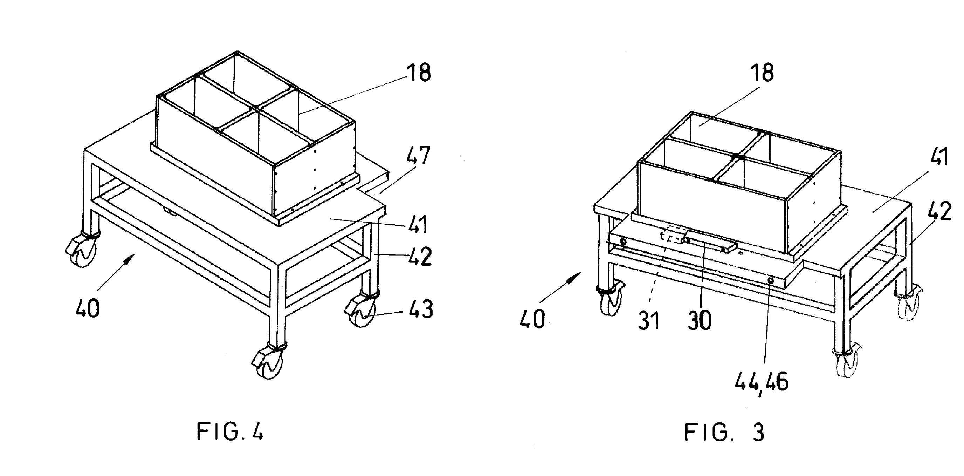

In einer bevorzugten Ausführungsform ist die Lageplatte 41 so gestaltet, dass diese direkt an der frei liegenden Seitenkante 17' der Aufnahme 17 zum Anliegen kommt und zudem an dieser Seitenkante 17' Andockmittel vorgesehen sind, die mit entsprechenden Andockmitteln an einer Seitenkante der Ladeplatte 41 des Transportwagens 40 zusammen wirken können. Die Andockmittel sind generell mit 44 bezeichnet. Im hier dargestellten, bevorzugten Ausführungsbeispiel sind die Andockmittel 44 an der Seitenkante 17' als Andockbolzen 45 gestaltet. Die Andockmittel 44 am Transportwagen 40 sind in diesem Falle wie die Figur 3 zeigt entsprechend angepasste Andockbohrungen 46, die an jener Seitenkante 41' der Ladeplatte 41 angebracht sind, die mit der Seitenkante 17' der Aufnahme 17 zum Anliegen bringbar ist.

Im hier dargestellten Beispiel ist der Transportwagen 40 lediglich zur Aufnahme einer Werkzeugeinheit 18 ausgelegt. Dies ist jedoch nicht zwingend. Der Transportwagen 40 kann auch grösser gestaltet sein, so dass darauf beziehungsweise auf dessen Ladeplatte 41 zwei Werkzeugeinheiten 18 Platz finden. Im Prinzip kann der Ladewagen 41 genau so breit gestaltet sein wie die Länge der Seitenkante 17', die für die Andockung zur Verfügung steht. Im hier gezeigten Beispiel ist der Transportwagen 40 etwas grösser und die Ladeplatte 41 ist mit Ausnehmungen 47 versehen, so dass der überstehende Teil der Ladeplatte 41' eine Art Überbrückungszunge bildet zwischen der eigentlichen Ladeplatte 41 und der Aufnahme 17.

Des Weiteren ist es vorteilhaft, wenn auch auf der Ladeplatte 41 Zentrierungsbacken 31 abnehmbar angeordnet sind. Eine solche abnehmbare Zentrierungsbacke 31 ist in der Figur 3 dargestellt. Selbstverständlich wird man natürlich zwei solche abnehmbaren Zentrierungsbacken 31 anbringen, so dass der Zentrierungsbalken 30 der Werkzeugeinheit 18 genau dazwischen gefahren werden kann. Bevor man die Werkzeugeinheit 18 von der Ladeplatte 41 auf die Aufnahme 17 verschiebt, nimmt man selbstverständlich die entsprechenden Zentrierbacken 31 weg. Hiermit wird lediglich sichergestellt, dass die Werkzeugeinheit auf dem Transportwagen korrekt positioniert ist, so dass diese direkt lagekorrekt auf die Aufnahme 17 verschoben werden kann, bis der Zentrierungsbalken 30 zwischen den Zentrierungsbacken 31 auf der Aufnahme 17 zu liegen kommt. Statt Zentrierungsbacken 31 wäre es selbstverständlich auch möglich lediglich einseitig oder auch beidseitig auf der Ladeplatte 41 Führungsleisten anzubringen, die eine exakte Zuführung der Werkzeugeinheit 18 auf die Aufnahme 17 sicherstellt.

Obwohl in der vorliegenden Zeichnung die erfindungsgemässe Lösung lediglich für eine Arbeitsstation 1 als Tiefziehstation dargestellt ist, kann genau dieselbe Lösung für jede Arbeitsstation einer Blisterverpackungsmaschine realisiert sein. Hierbei braucht es selbstverständlich nicht für jede Arbeitsstation einen Transportwagen 40 sondern derselbe Transportwagen kann für alle Arbeitsstationen 1, 10, 100, 101 verwendet werden. Bedingung ist jedoch und dies ist durchaus auch beabsichtigt, dass die Arbeitsstationen allesamt gleich dimensioniert sind. Dies macht auch deshalb Sinn da die Werkzeugeinheiten 18 in den verschiedenen Arbeitsstationen praktisch etwa gleich gross sind.

### Bezugszeichenliste:

- 1: Arbeitsstationen
- 2: Blisterverpackungsmaschine
- 3: Abrollstation
- 4: Füllstation
- 4': Zufuhrtrichter
- 5: zweite Abrollstation
- 11: Rahmenkonstruktion
- 12: Längsholme
- 13: Querholme
- 14: Trägersäulen
- 15: Längsholme
- 16: Führungsmittel
- 17: Aufnahme 17'Seitenkante der Aufnahme
- 18: Werkzeugeinheit 18'vorstehende Abschnitte
- 19: Werkzeughaube
- 20: Heizplatte
- 21: Hebemechanismus
- 22: Kolbenzylindereinheit
- 23: Dreieckumlenker
- 24: Kniehebel
- 25: Führungswinkel
- 26: Lagerbuchen
- 27: Drehlager
- 30: Zentrierungsbalken
- 31: Zentrierungsbacken
- 40: Transportwagen
- 41: Ladeplatte 41'Seitenkante der Ladeplatte
- 42: Tischbeine
- 44: Andockmittel
- 45: Andockbolzen
- 46: Andockbohrungen
- 47: Ausnehmungen

## Patentansprüche

1. Arbeitsstation (1,10,100,101) einer Blisterverpackungsmaschine (2), insbesondere einer Tiefziehstation, einer Siegel- oder Schweissstation oder einer Stanz- oder Prägestation, umfassend eine Rahmenkonstruktion (11) mit unteren Längs- (12) und Querholmen (13) und darin gelagertem Hebemechanismus (21), sowie oberen Längsholmen (15) zwischen denen die entstehende Blisterverpackung transportiert wird, sowie zwischen den unteren und oberen Holmen (12, 15) angeordnete Trägersäulen (14) und Führungsmittel (16) zur geführten Vertikalbewegung einer Aufnahme (17) auf der eine auswechselbare Werkzeugeinheit (18) angeordnet ist, **dadurch gekennzeichnet, dass** die Trägersäulen (14) und Führungsmittel (16) mindestens auf einer Seite der Arbeitsstation weiter voneinander distanziert sind als die Längsausdehnung der Werkzeugeinheit (18) und wobei die Werkzeugeinheit (18) auf der Aufnahme (17) quer zur Längsrichtung von beziehungsweise auf dieser verschiebbar ist, und auf dieser mittels Positioniermittel Lagekorrekt haltbar ist, so dass eine seitliche transversale Auswechselbarkeit der Werkzeugeinheit (18) ermöglicht ist.

2. Arbeitsstation (1) nach Anspruch 1, **dadurch gekennzeichnet, dass** die Arbeitsstation (1) einen frei beweglichen Transportwagen (40) umfasst mit einer Ladeplatte (41), welche in der Höhe einer definierten Tieflage der Aufnahme (17) entspricht und Positioniermittel aufweist zur lagepositionierten Anordnung einer Werkzeugeinheit (18), und dass ferner die Lagerplatte (41) des Transportwagens (40) und die Aufnahme (17) der Arbeitsstation aufeinander abgestimmte Andockmittel (44) aufweisen.

3. Arbeitsstation (1) nach Anspruch 1, **dadurch gekennzeichnet, dass** an der Werkzeugeinheit (18) ein Zentrierungsbalken (30) angebracht ist und auf der Aufnahme (17) Zentrierungsbacken (31) befestigt sind zwischen denen der Zentrierungsbalken (30) einfahrbar ist.

4. Arbeitsstation (1) nach Anspruch 3, **dadurch gekennzeichnet, dass** in der Aufnahme (17) Gewindelöcher angeordnet sind die mit Durchgangslöcher im seitlichen Führungswangen (18') an der Werkzeugeinheit (18) fluchtend zusammen passen, wenn der Zentrierungsbalken (30) zwischen den Zentrierungsbacken (30) lagegenau eingeschoben ist.

5. Arbeitsstation (1) nach Anspruch 1, **dadurch gekennzeichnet, dass** die Trägersäulen (14) gleichzeitig die Führungsmittel (16') für die Vertikalbewegung der Aufnahme (17) bilden.

6. Arbeitsstation (1) nach Anspruch 1, **dadurch gekennzeichnet, dass** an allen vier Ecken der Aufnahme (17) Führungswinkel (25) befestigt sind in denen einerseits Lagerbuchsen (26) angeordnet durch die die Trägersäulen (14) geführt sind und andererseits Drehlager (27) angebracht sind in denen Hebel drehbar gelagert sind, die Teil des Hebemechanismus sind.

7. Arbeitsstation (1) nach Anspruch 1, **dadurch gekennzeichnet, dass** der Hebemechanismus (21) aus zwei gleichsinnig sich bewegenden Kniehebelsysteme besteht auf denen eine Hydraulikkolbenzylindereinheit (22) wirkt mittels dem die Aufnahme (17) auf- und abbewegbar ist.

8. Arbeitsstation (1) nach Anspruch 2, **dadurch gekennzeichnet, dass** die Andockmittel (44) am Transportwagen (40) Andockbohrungen (46) oder Andockbolzen (45) in beziehungsweise an der seitlichen äusseren Längsstirnflächen (41') der Lagerplatte (41) sind, während die Andockmittel (44) an der Aufnahme (17) an beziehungsweise in der Längsstirnfläche (17') angebrachte Andockbolzen (45) oder Andockbohrungen (46) sind.

9. Arbeitsstation (1) nach Anspruch 2, **dadurch gekennzeichnet, dass** der Transportwagen (40) auf allseitig schwenkbaren und arretierbaren Rollen (46) läuft.

10. Arbeitsstation (1) nach Anspruch 2, **dadurch gekennzeichnet, dass** der Transportwagen (40) eine Ladeplatte (41) aufweist, die so gross ist, dass zwei Werkzeugeinheiten (18) darauf Platz finden, so dass auf demselben Transportwagen (40) auf einer Seite die aus der Arbeitsstation (1) herauszunehmende Werkzeugeinheit (18) aufschiebbar ist und auf der anderen Seite die einzuwechselnde Werkzeugeinheit (18) Platz findet.

11. Arbeitsstation (1) nach Anspruch 10, **dadurch gekennzeichnet, dass** die Ladeplatte (41) an zwei einander gegenüberliegenden Seitenkanten mit Andockmitteln (44) versehen ist.

12. Arbeitsstation (1) nach Anspruch 1, **dadurch gekennzeichnet, dass** auf den oberen Lägsholmen (12) eine mit der Arbeitseinheit (1) zusammen wirkende Werkzeughaube (19) angeordnet ist.

13. Blisterverpackungsmaschine, **dadurch gekennzeichnet, dass** diese mindestens zwei Arbeitsstationen (1, 10, 100, 101) nach mindestens einer der vorangegangenen Ansprüche aufweist.
